Europäisches Patentamt

European Patent Office

Office européen des brevets

(19)

(11) Veröffentlichungsnummer: **0 289 656**
**B1**

(12)

# EUROPÄISCHE PATENTSCHRIFT

(45) Veröffentlichungstag der Patentschrift:
28.03.90

(51) Int. Cl.⁴: **B60S 1/34**

(21) Anmeldenummer: **87116772.2**

(22) Anmeldetag: **13.11.87**

(54) **Wischarm, insbesondere für Scheibenwischanlagen an Kraftfahrzeugen.**

(30) Priorität: **02.05.87 DE 3714649**

(43) Veröffentlichungstag der Anmeldung:
**09.11.88 Patentblatt 88/45**

(45) Bekanntmachung des Hinweises auf die Patenterteilung:
**28.03.90 Patentblatt 90/13**

(84) Benannte Vertragsstaaten:
**ES FR GB IT**

(56) Entgegenhaltungen:
**DE-A- 3 521 527**
**DE-C- 3 523 546**
**FR-A- 2 124 713**
**FR-A- 2 544 677**
**GB-A- 912 469**

(73) Patentinhaber: **SWF Auto-Electric GmbH, Stuttgarter Strasse 119 Postfach 135,**
**D-7120 Bietigheim-Bissingen(DE)**

(72) Erfinder: **Egner-Walter, Bruno, Käferflugstrasse 43,**
**D-7100 Heilbronn(DE)**
Erfinder: **Schmid, Eckhardt, Heilbronner Strasse 62,**
**D-7129 Brackenheim(DE)**
Erfinder: **Scholl, Wolfgang, Forststrasse 29,**
**D-7121 Gemmrigheim(DE)**

**Beschreibung**

Die Erfindung betrifft einen Wischarm mit den im Oberbegriff des Anspruchs 1 aufgeführten Merkmalen.

Ein derartiger Wischarm ist beispielsweise aus der DE-C 35 23 546 bekannt. Der Wischarm besitzt einen zweiarmigen Hebel, der um eine quer zur Wischarmlängsrichtung verlaufende Achse schwenkbar am Befestigungsteil gelagert ist. An dem ersten, näher bei der Wischerwelle verlaufenden Arm des Hebels greift ein innerhalb der Wischerwelle gelagertes Stellglied eines Stellantriebs an. Eine als Zugfeder ausgebildete Anpreßdruckfeder greift einerseits an einer in das Gelenkteil hineinragenden Wischstange und andererseits am zweiten Arm des Hebels an. Zur Anpreßdruckverstellung kann der Hebel stufenlos zwischen zwei Endstellungen verstellt werden. Wegen der vorgesehenen Möglichkeit zur Anpreßdruckverstellung ist der Wischarm für Scheibenwischeranlagen an Kraftfahrzeugen geeignet, die sehr schnell fahren können. Bei sehr hohen Fahrzeuggeschwindigkeiten soll hier der Anpreßdruck höher als üblich sein, so daß das Gelenkteil und das an der Wischstange daran befestigte Wischblatt nicht vom Fahrtwind abgehoben werden können. Der Wischarm erfüllt somit eine an moderne Fahrzeuge gestellte Anforderung.

Zum Wischblattwechsel oder wenn es sonst gewünscht wird, kann das Gelenkteil in eine Abklappstellung gebracht werden, bei der die Wirkungslinie der Anpreßdruckfeder jenseits der Totpunktlinie der Zugfeder gegenüber der Gelenkachse zwischen Befestigungsteil und Gelenkteil verläuft. Der Hebel steht dabei in der einen Endstellung. Wegen der beim Wischarm vorgegebenen Geometrien beträgt dieser Abklappwinkel etwa 85 Grad. Ein derart großer Abklappwinkel ist aber aus verschiedenen Gründen ungünstig. Zum einen kann der Wischarm dann nicht an Schweibenwischeranlagen Anwendung finden, bei denen der Wischarm im Befestigungsteilbereich und teilweise im Gelenkteilbereich durch Karosserieteile abgedeckt ist. Zum anderen werden das Gelenkteil und die mit ihm verbundenen Teile (Wischstange und/oder Wischblatt) von der Anpreßdruckfeder mit einer großen Wucht auf die zu reinigende Scheibe zubewegt, wenn es manuell von der Abklappstellung in die Parkstellung bzw. eine Betriebsstellung zurückbewegt und versehentlich zu früh losgelassen wird. Dadurch kann es zu schweren Beschädigung der Scheibe oder des Wischblatts kommen.

Aufgabe der Erfindung ist es, einen Wischarm der eingangs genannten Art zu schaffen, bei dem eine stabile Abklappstellung mit möglichst kleinem Abklappwinkel auf möglichst einfache und vorteilhafte Weise erreichbar ist.

Diese Aufgabe wird erfindungsgemäß mit einem Wischarm gelöst, welcher gemäß dem kennzeichnenden Teil des Anspruchs 1 ausgebildet ist. Dabei wird die an sich bekannte Tatsache ausgenutzt, daß durch die Verlagerung des zweiten Angriffspunktes der Anpreßdruckfeder relativ zur Gelenkachse zwischen Befestigungsteil und Gelenkteil der gegenüber sonst üblichen Konstruktionen mit einem nicht verlagerbaren zweiten Angriffspunkt der notwendige Abklappwinkel verkleinert ist, weil durch die Verlagerung des Angriffspunktes der senkrechte Abstand zwischen der Gelenkachse zwischen Befestigungsteil und Gelenkteil und der Wirkungslinie der Anpreßdruckfeder reduziert wird.

Die Verlagerung des zweiten Angriffspunkts der Anpreßdruckfeder kann dabei durch Bewegen des Hebels bewirkt werden. Dazu muß dann aber der Stellantrieb wirken. Dies ist vermeidbar, wenn Anspruch 3 verwirklicht wird.

Der zweite Angriffspunkt der Anpreßdruckfeder braucht dabei prinzipiell nicht weit verlagert werden. So kann er so weit verlagert werden, daß die Wirkungslinie der Anpreßdruckfeder wie in den Betriebsstellungen diesseits von deren Totpunktlinie gegenüber der Gelenkachse zwischen Befestigungsteil und Gelenkteil verläuft, wenn Mittel zum Halten des Gelenkteils vorgesehen werden. Wenn jedoch Anspruch 2 verwirklicht wird, ist kein solches Mittel nötig.

Bei der in Anspruch 4 vorgeschlagenen linearen Verlagerung des zweiten Angriffspunkts der Anpreßdruckfeder kann eine Längung derselben und damit eine zu vorzeitiger Funktionsverminderung führende Belastung derselben umgangen werden.

Im Prinzip könnte dabei die Verlagerung des zweiten Angriffspunktes der Anpreßdruckfeder am Hebel durch Führung des Angriffspunktes in einem in den Hebel eingearbeiteten Langloch erfolgen. Bei einer solchen Führung besteht aber bei Festsetzen von Schmutz, Eis oder Rost im Langloch die Gefahr, daß der zweite Angriffspunkt der Anpreßdruckfeder die geplante Endstellung nicht erreicht. Deshalb wird im Anspruch 6 vorgeschlagen, den zweiten Angriffspunkt der Anpreßdruckfeder entlang einer Führungsschiene gleitend beweglich zu lagern. Dabei wird hier unter einer Schiene ein Bauteil verstanden, das andere gleitend bewegliche Teile führt. Es wird darauf hingewiesen, daß diese Art der Lagerung des zweiten Angriffspunktes der Anpreßdruckfeder ohne weiteres mit Vorteil bei einem Wischarm ohne Anpreßdruckverstellung realisierbar ist.

Ein besonders leichtes Gleiten während der gesamten Gebrauchsdauer der Schiene und damit üblicherweise des gesamten Wischarms wird gewährleistet, wenn die in Anspruch 7 aufgezeigte Materialauswahl zur Anwendung kommt.

Durch die in Anspruch 8 aufgezeigte Maßnahme wird prinzipiell gewährleistet, daß sich der zweite Angriffspunkt der Anpreßdruckfeder nicht ungewollt verlagert.

In Anspruch 9 ist angegeben, wie die sichere Lage des zweiten Angriffspunktes der Anpreßdruckfeder bei einem Wischarm mit Anpreßdruckverstellung konstruktiv gewährleistet wird. Bei Verwendung der in Anspruch 7 genannten Materialien beträgt der Reibwinkel, d.h. der Winkel, bei dem sich die aneinanderliegenden Teile gerade noch nicht gleitend gegeneinander bewegen, ungefähr 8,5 Grad.

In der Praxis hat sich herausgestellt, daß der in Anspruch 10 angegebenen Abklappwinkel besonders vorteilhaft ist. Das Gelenkteil nimmt hier in der Abklappstellung keine unerwünscht weite Lage von der Scheibe ein, von der aus es bei einem versehentlichen Loslassen beim Zurückbewegen in die Parkstellung aufgrund der Wirkung der Anpreßdruckfeder mit großer Kraft auf die Scheibe zurückbewegt würde. Da die Wirkungslinie des Federelements bei einem erfindungsgemäßen Wischarm aber in der Abklappstellung jenseits der Gelenkachse zwischen Befestigungsteil und Gelenkteil verlaufen soll und die Gelenkachse von einem Niet oder dergleichen verkörpert sein muß und üblicherweise in einer an das Befestigungsteil angeformten Aufnahme gelagert ist und demgemäß einen relativ großen Querschnitt besitzt, müssen Maßnahmen getroffen werden, daß das Bauteil, an dem der zweite Angriffspunkt der Anpreßdruckfeder verkörpert ist, nicht an die Aufnahme anschlägt, bevor die Wirkungslinie der Anpreßdruckfeder jenseits der Gelenkachse liegt. Dies kann zum einen dadurch erreicht werden, daß man eine im Bereich der Schwenkbewegung der Anpreßdruckfeder bzw. eines Bügels, über den die Anpreßdruckfeder am Hebel wie in den Ansprüchen 13 bis 16 aufgezeigt angreift, ausgesparte Gelenkachse vorsieht. Letzteres kann durch die Verwendung zweier koaxialer, kürzer als üblich ausgebildeter und auf Abstand zueinander in zwei Aufnahmen des Befestigungsteils gehaltener Gelenkniete realisiert werden. Wenn Anspruch 16 verwirklicht wird, ist aber meistens die Verwendung eines im Gelenkachsenbereich wie üblich gestalteten Befestigungsteils und eines einzigen Gelenkniets möglich.

In Anspruch 11 ist angegeben, wie die Führungsschiene für den zweiten Angriffspunkt der Anpreßdruckfeder besonders vorteilhaft am Anpreßdruckverstellhebel gehalten sein kann.

Theoretisch ist auch die in Anspruch 12 vorgeschlagene einstückige Fertigung von Schiene und Hebel möglich. Sie ist aber dann nicht empfehlenswert, wenn der Hebel wie an sich üblich aus einem Druckgußmaterial gefertigt ist, weil dann keine genügende mechanische Stabilität der Schiene gewährleistet ist.

Weitere vorteilhafte Einzelheiten und Ausgestaltungen der Erfindung sind aus den übrigen Unteransprüchen sowie aus der nachfolgend erläuterten Zeichnung ersichtlich, die ein Ausführungsbeispiel zeigt.

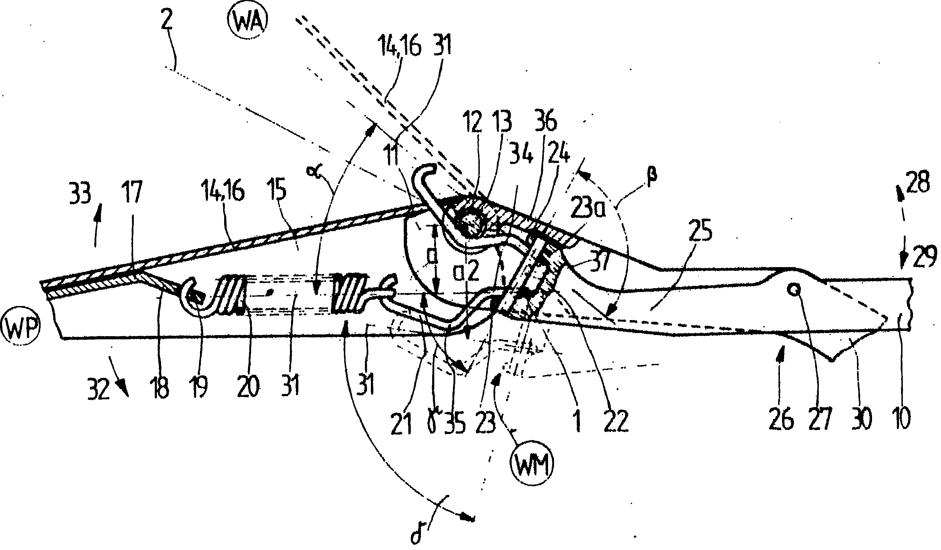

In der einzigen Figur ist ein Teilbereich eines Wischarms im Längsschnitt in verschiedenen Stellungen dargestellt.

Der Wischarm ist an einer Kraftfahrzeug-Frontscheibenwischanlage vorgesehen und besitzt ein Befestigungsteil 10, das an seinem nicht dargestellten hinteren Ende drehfest an einer Wischerwelle befestigt ist. Das Befestigungsteil 10 besitzt zwei sich in Wischarmlängsrichtung erstreckende Seitenwände 11, die jeweils nahe ihres vorderen Endes oben eine sich quer zur Wischarmlängsrichtung erstreckende Aufnahme 12 für eine Gelenkachse 13, die als Gelenkniet ausgebildet ist, besitzen.

Weiter besitzt der Wischarm ein in Querschnitt U-förmiges Gelenkteil 14, das zwei Seitenwangen 15 besitzt, die durch einen Steg 16 miteinander verbunden sind. Mit den Seitenwangen 15 ist es am Gelenkniet 13 angelenkt. An ihrem vorderen Ende umgreifen die Seitenwangen 15 und der Steg 16 eine Wischstange 17, die an ihrem nicht dargestellten vorderen Ende mit einem Wischblatt verbunden ist. Deren innerhalb des Gelenkteils 14 liegendes Ende ist nach unten abgebogen und mit einem Durchbruch 19 versehen. In diesem Durchbruch 19 ist eine als Zugfeder ausgebildete Anpreßdruckfeder 20 eingehängt, die andererseits mit einem zweiten Angriffspunkt 1 hinter und unterhalb der Gelenkachse 13 über einen sich in Wischarmlängsrichtung erstreckenden Bügel 21 auf nichtrostendem Stahl an einer von einem zylindrischen Stift 22 aus nichtrostendem Stahl realisierten Schiene eingehängt ist. Der Stift 22 ist schräg zur Höhenerstreckung des Wischarms zwischen zwei Zinken 23 und 24 angeordnet, die jeweils eine Bohrung 23a besitzen, in die der Stift 22 endseitig eingepreßt ist. Die Zinken 23 und 24 gehören zu einem zweiten Arm 25 eines zweiarmigen Hebels 26, der sich zwischen den Seitenwänden 11 des Befestigungsteils 10 erstreckt und an diesem um eine sich quer zur Wischarmlängsrichtung erstreckende Achse 27 zum einen in Pfeilrichtung 28 nach oben und zum anderen in Pfeilrichtung 29 nach unten schwenkbar gelagert ist. Am nicht dargestellten Ende des ersten Arms 30 des Hebels 26 greift ein Stellantrieb an, der in den beiden Schwenkrichtungen 28 und 29 des Hebels 26 wirken kann. Mittels des Stellantriebs kann der Hebel 26 stufenlos in den beiden Schwenkrichtungen 28 und 29 zwischen zwei Endstellungen WP und W M verstellt werden. Die eine Endstellung WP ist mit ausgezogenen Linien dargestellt, die andere Endstellung W M mit gestrichelten Linien.

In der mit ausgezogenen Linien dargestellten Endstellung WP verläuft die Wirkungslinie 31 der Zugfeder 20 diesseits, das heißt unterhalb der Gelenkachse 13 in einem senkrechten Abstand a zur Gelenkachse 13. Dadurch werden das Gelenkteil 14 und die mit ihm verbundenen Teile Wischstange 17 und Wischblatt mittels der Zugfeder 20 mit einer gewissen Kraft in Drehrichtung 32 gegen die nicht dargestellte zu reinigende Scheibe vorgespannt.

Dies ist die mit einer ersten Betriebsstellung identische Parkstellung WP des Wischarms.

Wenn sich die Wischerwelle dreht, wirkt der Stellantrieb in Abhängigkeit von der Fahrzeuggeschwindigkeit automatisch auf den Hebel 26 ein. Wenn die Fahrzeuggeschwindigkeit groß ist, wird der Hebel 26 in seine Schwenkrichtung 28 gedreht, bis er die mit gestrichelten Linien dargestellte Endstellung WM erreicht hat. Hier verläuft die Wirkungslinie 31 der Zugfeder 20 in einem senkrechten Abstand a2 diesseits der Gelenkachse 13, der größer als der Abstand a ist. Dadurch werden das Gelenkteil 14 und die mit ihm verbundenen Teile Wischstange 17 und Wischblatt mit einer größeren Kraft als in der ersten Betriebsstellung WP in Drehrichtung 32 gegen die Scheibe vorgespannt. Dies ist die Betriebsstellung WM des Wischarms, in welcher der maximal gewünschte Anpreßdruck herrscht. Dieser ist so groß gewählt, daß das Wischblatt die Scheibe wischen und nicht durch den Fahrtwind abgehoben werden kann.

Wenn das Fahrzeug weniger schnell fährt, nehmen der Hebel 26 und das Gelenkteil 14 eine in Abhängigkeit von der Fahrzeuggeschwindigkeit eine zwischen den Endstellungen WM und WP liegende Stellung ein, die gewährleistet, daß das Wischblatt die Scheibe wischen und nicht durch den nun geringeren Fahrtwind abgehoben werden kann.

Zum Wischblattwechsel oder wenn es sonst gewünscht wird, können das Gelenkteil 14 und die mit ihm verbundenen Teile Wischstange 17 und Wischblatt von der Parkstellung WP aus durch Drehen dieser Teile um die Gelenkachse 13 in Drehrichtung 33 in die mit strichpunktierten Linien angedeutete Abklappstellung WA gebracht werden. In der Abklappstellung WA verläuft die Wirkungslinie 31 der Zugfeder 20 oberhalb und damit jenseits des Totpunkts 2 der Zugfeder 20 gegenüber der Gelenkachse 13. Sie ist hier um einen Winkel α von 45 Grad genenüber der Parkstellung WP verlagert. In der Praxis hat sich herausgestellt, daß dieser Abklappwinkel α von 45 Grad besonders vorteilhaft ist. Das Gelenkteil 14 nimmt hier keine unerwünscht weite Lage von der Scheibe ein, von der aus es bei einem versehentlichen Loslassen beim Zurückbewegen aufgrund der Wirkung der Anpreßdruckfeder mit großer Kraft in Drehrichtung 32 auf die Scheibe gezogen werden könnte, so daß die Traggestellteile des Wischblatts beschädigt werden könnten.

Dieser vorteilhafte Abklappwinkel α von 45 Grad kann trotz des zuvor beschriebenen Wischarmaufbaus deswegen realisiert werden, weil beim Abklappen des Gelenkteils 14 der zweite Angriffspunkt 1 der Zugfeder 20 in die nach oben weisende Schwenkrichtung 28 des Hebels 26 relativ zu diesem verlagert wird. Dabei wird die bekannte Tatsache ausgenutzt, daß durch die Verlagerung des zweiten Angriffspunkts 1 der Zugfeder 20 relativ zur Gelenkachse 13 zwischen Befestigungsteil 10 und Gelenkteil 14 der gegenüber sonst üblichen Konstruktionen mit einem unbeweglichen zweiten Angriffspunkt der Zugfeder der notwendige Abklappwinkel verkleinert ist, weil durch die Verlagerung dieses Angriffspunktes der senkrechte Abstand a zwischen der Gelenkachse 13 zwischen Befestigungsteil 10 und Gelenkteil 14 und der Wirkungslinie 31 der Zugfeder 20 reduziert wird.

Zur Verlagerung kann dabei der zweite Angriffspunkt 1 der Zugfeder 20 entlang des zylindrischen Stiftes 22 gleiten. Dazu ist der Bügel 21, über den die Zugfeder am Stift 22 eingehängt ist, mit einer U-förmigen Öse 34 ausgestattet, die quer zur Wischarmlängsrichtung verläuft und den Stift 22 umgreift. Der Bügel 21 besitzt etwa mittig eine nach unten gerichtete Ausbuchtung 35, welche maßlich an den Querschnitt, d.h. den Durchmesser des mittig seiner Längserstreckung freistehenden Gelenkniets 13 derart angepaßt ist, daß der Bügel 21 in der Abklappstellung WA an der Unterseite des Gelenkniets 13 anliegt und die Wirkungslinie 31 der Zugfeder 20 wie zuvor beschrieben jenseits des Gelenkniets 13 verläuft. Außerdem liegt dabei die obere Zinke 24 des Hebels 26 an einer die Seitenwände 11 des Befesigungsteils 10 entlang deren Oberkante verbindenden Decke 36 an. Die U-förmige Öse 34 liegt dabei an einer von der Unterseite der oberen Zinke 24 des Hebels 26 realisierten Anschlagfläche an.

Der Stift 22 ist dabei derart zwischen den Zinken 23 und 24 des Hebels 26 gehalten, daß seine Achse 37 in der Abklappstellung WA die Wirkungslinie 31 der Zugfeder 20 in einem vom rechten Winkel abweichenden Winkel β schneidet. Speziell wird der Stift 22 derart gehalten, daß sein in der oberen Zinke 24 befestigtes oberes Ende nach hinten geneigt verläuft und die Achse 37 des Stifts 22 mit der Wirkungslinie 31 der Zugfeder 20 einen sich zum hinteren, oberen Ende des Befestigungsteils 10 öffnenden Winkel β von etwa 100 Grad einschließt. Die Zugfeder 20 wirkt somit in Drehrichtung 33. Dieser Winkel β ist somit um etwa 1,5 % größer als der aus 90 Grad plus dem etwa 8,5 Grad betragenden Reibwinkel der Materialien zwischen der Öse 34 des Bügels 21 und dem Stift 22, die, wie zuvor erwähnt, beide aus Stahl bestehen, zusammengesetzte Winkel von etwa 98,5 Grad. Bei Unterschreiten dieses Winkels würde die Öse 34 des Bügels 21 entlang des Stiftes 22 nach unten gleiten, wodurch die Federwirkungslinie 31 nach unten verlagert würde und das Gelenkteil 14 in die Parkstellung WP zurückklappen würde. Insgesamt betrachtet, ist somit die Abklappstellung WA stabil, d.h. das Gelenkteil 14 und die mit ihm verbundenen Teile Wischstange 17 und Wischblatt können nicht durch einen Windstoß oder dergleichen ungewollt in die Parkstellung WP bewegt werden.

Aber auch die Parkstellung WP und damit die erste Betriebsstellung sind stabil. Die Öse 34 des Bügels 21 liegt hier an der von der Oberseite der unteren Zinke 23 des Hebels 26 gebildeten Anschlagfläche an. Der Hebel 26 liegt in der gleichen Lage wie in der Abklappstellung WA. Die Achse 37 des Stifts 22 schließt mit der Wirkungslinie 31 der Zugfeder 20 einen sich zum unteren, vorderen Ende des Gelenkteils 14 öffnenden Winkel γ von etwa 60 Grad ein. Dieser Winkel γ ist somit um etwa 40 % kleiner als der aus 90 Grad plus dem etwa 8,5 Grad betragenden Reibwinkel zwischen Öse 34 und Stift 22 zusammengesetzte Winkel von etwa 98,5 Grad. Bei Überschreiten dieses Winkels würde die Öse 34 entlang des Stiftes 22 nach oben gleiten, wodurch die Federwirkungslinie 31 nach oben verlagert würde und die Zugfeder 20 demgemäß weniger stark als gewünscht in Drehrichtung 32 wirken würde.

Ebenso ist die Betriebsstellung WM stabil, in welcher der gewünschte größte Anpreßdruck herrscht. Die Öse 34 des Bügels 21 liegt hier ebenso wie in der Stellung WP an der von der Oberseite der unteren Zinke 23 des Hebels 26 gebildeten Anschlagfläche an. Die Achse 37 des Stifts 22 schließt mit der Wirkungslinie 31 der Zugfeder 20 einen sich zum unteren, vorderen Ende des Gelenkteils 14 öffnenden Winkel δ von etwa 85 Grad ein. Dieser Winkel δ ist somit um etwa 11 % kleiner als der aus 90 Grad plus dem etwa 8,5 Grad betragenden Reibwinkel zwischen Öse 34 und Stift 22 zusammengesetzte Winkel von etwa 98,5 Grad. Die Öse 34 kann somit nicht entlang des Stiftes 22 nach oben gleiten; die Zugfeder 20 wirkt demgemäß so stark wie gewünscht in Drehrichtung 32.

In den zwischen den Betriebsstellungen WM und WP liegenden, nicht dargestellten Betriebsstellungen beträgt der von der Wirkungslinie 31 der Zugfeder 20 und von der Achse 37 des Stifts 22 eingeschlossene, sich zum unteren, vorderen Ende des Gelenkteils 14 öffnende Winkel zwischen 60 und 85 Grad. Die Öse 34 kann somit auch hier nicht entlang des Stiftes 22 nach oben gleiten, die Zugfeder 20 wirkt demgemäß auch hier so stark wie gewünscht in Drehrichtung 32, so daß der jeweils gewünschte Anpreßdruck herrscht.

Abschließend sei darauf hingewiesen, daß die zuvor beschriebenen Funktionen des Wischarms nicht vom Bügel 21 abhängig sind. Ebenso könnte eine Stielösenfeder verwendet werden, deren Stiel wie der Bügel 21 mit einer Ausbuchtung 35 gestaltet ist. Die Ausbuchtung 35 könnte sowohl beim Bügel 21 als auch bei einer Stielösenfeder entfallen, wenn eine unterteilte Gelenkachse zwischen Befestigungsteil und Gelenkteil verwendet würde, die aus zwei Gelenknieten oder dergleichen besteht.

Da alle diese zuletzt beschriebenen Variationen mehrere nicht an sich gebräuchliche Wischarmteile bzw. -ausgestaltungen beinhalten, wird aus Preisgründen die zuvor ausführlich beschriebene Variante bevorzugt. Dabei sei darauf hingewiesen, daß die Schiene hier deshalb als Stift 22 und demgemäß als separates Teil ausgebildet ist, weil für den Hebel 26 ein relativ weiches Material genügt. Bei einer Hebelfertigung aus Stahl oder dergleichen wäre aber auch eine einstückige Fertigung der Schiene 22 mit dem Hebel 26 möglich.

Weiterhin sei nochmals darauf hingewiesen, daß selbstverständlich die zuvor beschriebene Verlagerung des zweiten Angriffspunktes 1 der Zugfeder 20 entlang einer Schiene 22 beim Abklappen des Gelenkteils 14 auch bei einem Wischarm ohne Anpreßdruckverstellungsmöglichkeit vorteilhaft ist. Die Schiene 22 könnte dort an einer Decke 36 des Befestigungsteils 10 befestigt oder, wenn diese aus einem geeigneten Material wie Stahl bestünde, einstückig mit ihr bzw. dem Befestigungsteil 10 gefertigt sein.

Sebstverständlich ist auch die Verwendung anderer Materialien als Stahl für die Schiene und für das den zweiten Angriffspunkt der Anpreßdruckfeder verkörpernde Bauteil möglich. Die Materialien müssen nur hart sein, damit ihre Bruchstabilität gewährleistet ist und sie müssen niedrige Reibwerte besitzen, damit ein leichtes Gleiten des Bauteils auf der Schiene möglich ist. So kommt z.B. Teflon als Material in Betracht. Auch mit Teflon oder anderen Kunststoffen beschichtete Metalle kommen in Betracht.

## Patentansprüche

1. Wischarm, insbesondere für Scheibenwischanlagen an Kraftfahrzeugen, mit einem an einer Wischerwelle fixierbaren Befestigungsteil, einem um die Gelenkachse schwenkbar daran angelenkten Gelenkteil und einer zwischen einem ersten Angriffspunkt am Gelenkteil und einem zweiten Angriffspunkt an einem Hebel am Befestigungsteil wirkenden Anpreßdruckfeder, wobei dieser Hebel in den Betriebsstellungen des Wischarms zwecks Veränderung der Wirkungslinie der Anpreßdruckfeder und damit des Anpreßdrucks innerhalb eines bestimmten Verstellbereichs verstellbar am Befestigungsteil geführt ist, dadurch gekennzeichnet, daß zum Abklappen des Gelenkteils (14) die Wirkungslinie (31) der Anpreßdruckfeder (20) durch Verlagerung des zweiten Angriffspunktes (1) der Anpreßdruckfeder (20) aus dem während des Wischbetriebes üblichen Bereich (WP bis WM) heraus verstellbar ist.

2. Wischarm nach Anspruch 1, dadurch gekennzeichnet, daß sich die Wirkungslinie (31) der Anpreßdruckfeder (20) in der Abklappstellung (WA) jenseits des Totpunkts (2) der Anpreßdruckfeder (20) gegenüber der Gelenkachse (13) befindet.

3. Wischarm nach Anspruch 1 oder 2, dadurch gekennzeichnet, daß die Wirkungslinie (31) der Anpreßdruckfeder (20) durch Verlagerung des zweiten Angriffspunktes (1) der Anpreßdruckfeder (20) am Hebel (26) veränderbar ist.

4. Wischarm nach Anspruch 3, dadurch gekennzeichnet, daß der zweite Angriffspunkt (1) der Anpreßdruckfeder (20) am Hebel (26) entlang einer geraden Linie (37) verlagerbar ist.

5. Wischarm nach einem der vorhergehenden Ansprüche, dadurch gekennzeichnet, daß der Hebel (26) um eine quer zur Wischarmlängsrichtung verlaufende Achse (27) schwenkbar am Befestigungsteil (10) gelagert ist und mit einem in den Schwenkrichtungen (28, 29) des Hebels (26) wirkenden Stellantrieb wirkverbindbar ist.

6. Wischarm nach einem der Ansprüche 3 bis 5, dadurch gekennzeichnet, daß der zweite Angriffspunkt (1) der Anpreßdruckfeder (20) entlang einer Schiener (22) beweglich gelagert ist.

7. Wischarm nach Anspruch 6, dadurch gekennzeichnet, daß der zweite Angriffspunkt (1) der Anpreßdruckfeder (20) an einem nichtrostenden Stahlteil (21) angeordnet ist und daß die Schiene (22) aus einem nichtrostenden Stahlteil besteht.

8. Wischarm nach einem der Ansprüche 4 bis 7, dadurch gekennzeichnet, daß der zweite Angriffspunkt (1) der Anpreßdruckfeder (20) entlang einer Linie (37) verlagert wird, welche die Wirkungslinie (31) der Anpreßdruckfeder (20) in einem vom rechten Winkel abweichenden Winkel (β, γ, δ) schneidet.

9. Wischarm nach Anspruch 8, dadurch gekennzweichnet, daß der Winkel (γ, δ) in jeder Betriebsstellung (WM, WP) in einer gegebenenfalls von einer Betriebsstellung (WM, WP) abweichenden Parkstellung (WP) kleiner als 90 Grad plus dem Reibwinkel zwischen dem Bauteil (21), an dem der zweite Angriffspunkt (1) der Anpreßdruckfeder (20) angeordnet ist, und dem Lagerteil (22) für den zweiten Angriffspunkt (1) ist und daß der Winkel β in der Abklappstellung (WA) größer als 90 Grad plus dem Reibwinkel ist.

10. Wischarm nach Anspruch 1 und einem der übrigen Ansprüche, dadurch gekennzeichnet, daß der zweite Angriffspunkt (1) der Anpreßdruckfeder (20) in der Abklappstellung (WA) so weit gegenüber der Parkstellung (WP) verlagert ist, daß die Wirkungslinien (31) der Anpreßdruckfeder (20) einen Winkel (α) von 45 Grad einschließen.

11. Wischarm nach Anspruch 6, dadurch gekennzeichnet, daß die Schiene (22) an ihren beiden Endpunkten von einer von zwei Zinken (23, 24) gebildeten Aufnahme des Hebels (26) gehalten wird.

12. Wischarm nach Anspruch 6, dadurch gekennzeichnet, daß die Schiene einstückig mit dem Hebel gefertigt ist.

13. Wischarm nach wenigstens einem der Ansprüche 1 bis 12, dadurch gekennzeichnet, daß der zweite Angriffspunkt (1) der Anpreßdruckfeder (20) an einem sich in Wischarmlängsrichtung erstreckenden Bügel (21) angeordnet ist, der am Hebel (26) angreift.

14. Wischarm nach wenigstens einem der Ansprüche 1 bis 12, dadurch gekennzeichnet, daß die Anpreßdruckfeder als Stielösenfeder ausgebildet ist und unmittelbar am Hebel angreift.

15. Wischarm an Anspruch 4 und 12 oder 13, dadurch gekennzeichnet, daß die Schiene (22) zylindrisch ausgebildet ist und daß der Bügel (21) oder die Stielösenfeder die Schiene (22) mit einer quer zur Wischarmlängsrichtung verlaufenden u-förmigen Öse (34) umgreift.

16. Wischarm nach einem der Ansprüche 13 bis 15, dadurch gekennzeichnet, daß der Bügel (21) oder die Stielösenfeder mit einer an dem Querschnitt der Gelenkachse (13) zwischen Befestigungsteil (10) und Gelenkteil (4) angepaßten Ausbuchtung (35) gestaltet ist.

## Claims

1. A wiper arm, especially for windshield wiper systems on motor vehicles, comprising a fastening member which may be fixed on a wiper shaft, a link articulated thereon in a manner to be swivellable about an articulated axle and a contact pressure spring working between a first point of application on the link and a second point of application on a lever at the fastening member, wherein in the operating positions of the wiper arm the said lever, in order to vary the line of application of the pressure spring and thus the contact pressure, is adjustably guided on the fastening member within a particular regulating range, characterized in that the line of application (31) of the contact pressure spring (20) is adjustable out of the range (WP to WM) normally occupied during wiper operation in order to tilt the link (14).

2. A wiper arm according to claim 1, characterized in that in the tilted position (WA) the line of application (31) of the pressure spring (20) is located beyond the dead center (2) of the pressure spring (20) opposite the articulated axle (13).

3. A wiper arm according to claim 1 or 2, characterized in that the line of application (31) of the pressure spring (20) is variable by displacement of the second point of application (1) of the pressure spring (20) on the lever (26).

4. A wiper arm according to claim 3, characterized in that the second point of application (1) of the pressure spring (20) on the lever (26) is displaceable along a straight line (37).

5. A wiper arm according to any one of the preceding claims, characterized in that the lever (26) is mounted on the fastening member (10) in a manner to be swivelled about a shaft (27) transversely extending to the longitudinal direction of the wiper arm and to be operatively connected with an actuating drive working in the swivelling directions (28, 29) of the lever (26).

6. A wiper arm according to any one of claims 3 to 5, characterized in that the second point of application (1) of the pressure spring (20) is displaced along a rail (22).

7. A wiper arm according to claim 6, characterized in that the second point of application (1) of the pressure spring (20) is arranged on a stainless steel member (21) and that the rail (22) consists of a stainless steel portion.

8. A wiper arm according to any one of claims 4 to 7, characterized in that the second point of application (1) of the pressure spring (20) is displaced along a line (37) which intersects the line of application (31) of the presure spring (20) at an angle (β, γ, δ) deviating from a right angle.

9. A wiper arm according to claim 8, characterized in that in any operating position (WM, WP) and, if required, in a parking position (WP) deviating from the operating position (WM, WP) the angle (γ, δ) is smaller than 90° plus the angle of friciton between the structural unit (21) on which the second point of application (1) of the pressure spring (20) is arranged and the bearing member (22) for the second point of application (1) and that the angle (β) in the tilted position (WA) is larger than 90° plus the angle of friction.

10. A wiper arm according to claim 1 and any one of the other claims, characterized in that in the tilted position (WA) the second point of application (1) of the pressure spring (20) is so far displaced from the parking position (WP) that the lines of application (31) of the pressure spring (20) enclose an angle (α) of 45°.

11. A wiper arm according to claim 6, characterized in that in its two end points the rail (22) is held by a receiver of the lever (26) formed by two tines (23, 24).

12. A wiper arm according to claim 6, characterized in that the rail is integrally manufactured with the lever.

13. A wiper arm according to at least any one of claims 1 to 12, characterized in that the second point of application (1) of the pressure spring (20) is arranged on a yoke (21) extending in the longitudinal direction of the wiper arm and acting upon the lever (26).

14. A wiper arm according to at least any one of claims 1 to 12, characterized in that the pressure spring is formed as a so-called stalk-eye-spring and directly acts upon the lever.

15. A wiper arm according to claim 4 and 12 or 13, characterized in that the rail (22) is cylindrically formed and that the yoke (21) or the stalk-eye-spring encompasses the rail (22) by means of a U-shaped eye (34) extending transversely to the longitudinal direction of the wiper arm.

16. A wiper arm according to any one of claims 13 to 15, characterized in that the yoke (21) or the stalk-eye-spring has a bulge (35) adapted to the cross-section of the articulated axle (13) between fastening member (10) and link (14).

## Revendications

1. Bras porte-balai, notamment pour dispositif d'essuie-glace de pare-brise pour véhicule automobile, comportant un élément de fixation pouvant être fixé sur un axe d'essuie-glace, un élément articulé, articulé sur cet élément de manière à pouvoir pivoter autour d'un axe d'articulation, et un ressort de pression d'application agissant entre un premier point d'accrochage sur l'élément articulé et un second point d'accrochage sur un levier, monté sur l'élément de fixation, qui, dans les positions de travail du bras porte-balai, est guidé sur l'élément de fixation de façon à pouvoir être déplacé à l'intérieur d'un domaine déterminé de déplacement afin de faire varier la ligne d'action du ressort de pression d'application, et donc la pression d'application, caractérisé en ce que, pour le relèvement de l'élément articulé (14), la ligne d'action (31) du ressort de pression d'application (20) est déplaçable, à partir du domaine (WP à WM) utilisé habituellement pendant le fonctionnement de l'essuie-glace, grâce à un déplacement du second point d'accrochage (1) du ressort de pression d'application (20).

2. Bras porte-balai suivant la revendication 1, caractérisé en ce que, dans la position de relèvement (WA), la ligne d'action (31) du ressort de pression d'application (20) se trouve de l'autre côté de la position de point mort (2) de ce ressort (20) par rapport à l'axe d'articulation (13).

3. Bras porte-balai suivant la revendication 1 ou 2, caractérisé en ce qu'on peut faire varier la ligne d'action (31) du ressort de pression d'application (20) grâce à un déplacement du second point d'accrochage (1) de ce ressort (20).

4. Bras porte-balai suivant la revendication 3, caractérisé en ce que le second point d'accrochage (1) du ressort de pression d'application (20) sur le levier (26) est déplaçable le long d'une ligne droite (37).

5. Bras porte-balai suivant l'une des revendications précédentes, caractérisé en ce que le levier (26) est monté sur l'élément de fixation (10) de façon à pouvoir basculer autour d'un axe (27) s'étendant transversalement à la direction longitudinale du bras porte-balai, et en ce qu'il peut être relié, de façon à coopérer avec lui, à un mécanisme de réglage agissant dans les sens de pivotement (28, 29) du levier (26).

6. Bras porte-balai suivant l'une des revendications 3 à 5, caractérisé en ce que le second point d'accrochage (1) du ressort de pression d'application (20) est monté mobile le long d'un rail (22).

7. Bras porte-balai suivant la revendication 6, caractérisé en ce que le second point d'accrochage (1) du ressort de pression d'application (20) et disposé sur une pièce en acier inoxydable (21) et en ce que le rail (22) est constitué d'une pièce en acier inoxydable.

8. Bras porte-balai suivant l'une des revendications 4 à 7, caractérisé en ce que le second point d'accrochage (1) du ressort d'application (20) est déplacé le long d'une ligne (37) qui recoupe la ligne d'action (31) de ce ressort (20) suivant un angle ($\beta$, $\gamma$, $\delta$) différent d'un angle droit.

9. Bras porte-balai suivant la revendication 8, caractérisé en ce que, dans chaque position de travail (WM, WP) et dans une position de repos (WP) éventuellement différente d'une position de travail (WM, WP), l'angle ($\gamma$, $\delta$) et inférieur à un angle de 90° augmenté de l'angle de frottement entre la pièce (21) sur laquelle est disposé le second point d'accrochage (1) du ressort de pression d'application (20) et la pièce d'appui (22) prévue pour le second point d'accrochage (1), et en ce que, dans la position relevée (WA), l'angle B est supérieur à un angle de 90° augmenté de l'angle de frottement.

10. Bras porte-balai suivant la revendication 1 ou l'une des autres revendications, caractérisé en ce que, dans la position relevée (WA), le second point d'accrochage (1) du ressort de pression d'application (20) est déplacé par rapport à la position de repos (WP) en en étant éloigné dans une mesure telle que les lignes d'action (31) du ressort d'application (20) forment un angle ($\alpha$) de 45°.

11. Bras porte-balai suivant la revendication 6, caractérisé en ce que, à ses deux points extrêmes, le rail (22) est maintenu par un logement du levier (26) formé par deux dents de fourche (23, 24).

12. Bras porte-balai suivant la revendication 6, caractérisé en ce que le rail est réalisé en une seule pièce avec le levier.

13. Bras porte-balai suivant au moins l'une des revendications 1 à 12, caractérisé en ce que le second point d'accrochage (1) du ressort d'application (20) est disposé sur un étrier (21), s'étendant suivant la direction longitudinale du bras porte-balai, qui s'accroche sur le levier (26).

14. Bras porte-balai suivant au moins l'une des revendications 1 à 12, caractérisé en ce que le ressort de pression d'application est réalisé sous la forme d'un ressort à crochet à section raide et s'accroche directement sur le levier.

15. Bras porte-balai suivant l'une des revendications 12 et 13 lorsqu'elles dépendent de la revendication 4, caractérisé en ce que le rail (22) a une forme cylindrique et en ce que l'étrier (21) ou le ressort à crochet à section raide entoure ce rail (22) par un crochet (34) en U s'étendant transversalement à la direction longitudinale du bras porte-balai.

16. Bras porte-balai suivant l'une des revendications 13 à 15, caractérisé en ce que l'étrier (21) ou le ressort à crochet à section raide est pourvu d'une partie incurvée (35) adaptée à la section transversale de l'axe d'articulation (13) entre l'élément de fixation (10) et l'élément articulé (14).

EP 0 289 656 B1